# FASCICULE DE BREVET EUROPEEN

(11) **EP 3 526 061 B1**
(45) Date de publication et mention de la délivrance du brevet: **09.09.2020**
(21) Numéro de dépôt: 17793705.9
(22) Date de dépôt: 09.10.2017
(51) Int. Cl.: B60C 13/00, B60C 13/02

(54) **PNEUMATIQUE POURVU D'UN ANNEAU TEXTURE**
LUFTREIFEN MIT TEXTURIERTEM RING
PNEUMATIC TYRE WITH TEXTURED ANNULUS

(30) Priorité: 11.10.2016 FR 1670592
(43) Date de publication de la demande: 21.08.2019
(73) Titulaire: Compagnie Générale des Etablissements Michelin, 63000 Clermont-Ferrand (FR)
(72) Inventeur: LEJEUNE, Jonathan, 63040 Clermont-Ferrand Cedex 9 (FR); NOMURA, Masayohi, 63040 Clermont-Ferrand Cedex 9 (FR); MUHLHOFF, Olivier, 63040 Clermont-Ferrand Cedex 9 (FR)
(74) Mandataire: Demaure, Pierre-Yves
(86) Numéro de dépôt international: PCT/FR2017/052753
(87) Numéro de publication internationale: WO 2018/069610

(56) Documents cités:
- FR-A1- 2 976 523
- FR-A1- 3 007 325
- FR-A1- 3 014 365
- FR-A1- 3 022 851
- US-A1- 2012 043 693

## Description

### DOMAINE TECHNIQUE DE L'INVENTION

La présente invention concerne les pneumatiques pour véhicules. Elle concerne plus particulièrement des pneumatiques ayant un bon comportement aérodynamique.

### ETAT DE LA TECHNIQUE ANTERIEURE

Depuis maintenant plusieurs années, afin de faire face aux multiples enjeux liés à la protection de l'environnement, à la préservation des ressources naturelles, sans omettre le contrôle des coûts, il existe un besoin récurant de réduire la consommation énergétique des véhicules, en particulier des véhicules de tourisme. Une des voies exploitées consiste en la réduction de la résistance aérodynamique de ces véhicules.

Les pneumatiques dont un véhicule de tourisme est équipé, et plus particulièrement les pneumatiques montés sur l'essieu avant du véhicule, contribuent à la résistance aérodynamique de ce véhicule. On estime que la réduction à la résistance aérodynamique qui peut être obtenue par l'optimisation de ces pneumatiques correspond à environ 3% de la trainée totale du véhicule ; autrement dit, on peut espérer réduire la consommation de carburant en agissant sur la conception des pneus.

Un pneumatique ayant de bonnes performances aérodynamiques a été présenté dans le brevet US 4434830 A. Ce pneumatique possède de meilleures caractéristiques aérodynamiques que les pneumatiques de forme conventionnelle. La section transversale radiale du bandage pneumatique possède un contour extérieur de chaque côté de son plan circonférentiel médian qui se prolonge de façon continue axialement vers l'extérieur et radialement vers l'intérieur jusqu'au point où l'extérieur la surface de chaque paroi latérale croise une ligne se prolongeant radialement, qui est tangente au bord axialement externe du rebord de jante. Ce mode de réalisation implique une géométrie très spécifique, ce qui réduit fortement le champ d'application de la solution.

Si ce pneumatique, dans son utilisation sur un véhicule, possède effectivement une basse résistance aérodynamique, il est impératif d'améliorer encore davantage cette performance, pour répondre aux exigences croissantes des manufacturiers de véhicules et des consommateurs.

Le document US8261793 B2 décrit un pneumatique comportant une pluralité de cordons annulaires agencés selon une disposition à pas variable, le pas diminuant en allant dans la direction radialement extérieure. Ces cordons sont prévus de façon à faciliter les opérations de moulage et démoulage du pneumatique. Les documents US 2012/043693 A1, FR 3014365 A1, FR 2976523 A1, FR 3022851 A1 et FR 3007325 A1 décrivent d'autres exemples de pneumatiques à flancs texturés.

Les flancs des pneumatiques se salissent pendant leur usage. Ils se recouvrent de poudre de plaquette de frein, de poussières, et de boues. Ce sont les plus grosses particules collées et proéminentes qui viennent dégrader la performance aérodynamique du pneumatique tournant dans son environnement, en l'occurrence l'aile d'une voiture. La dégradation de cette performance entraine une augmentation non négligeable de la consommation du véhicule.

Pour pallier ces différents inconvénients, l'invention prévoit différents moyens techniques.

### EXPOSE DE L'INVENTION

Tout d'abord, un premier objet de l'invention consiste à prévoir un pneumatique agencé pour améliorer les caractéristiques aérodynamiques de l'ensemble formé par le véhicule et les pneumatiques.

Encore un objet de l'invention consiste à réduire les sources de trainée aérodynamique au niveau des roues du véhicule.

Pour ce faire, l'invention prévoit un pneumatique en matériau caoutchoutique comprenant une bande de roulement et deux flancs délimitant ladite bande de roulement, chaque flanc comprenant une zone de largeur maximale, le pneumatique comprenant au moins une texture sur au moins un flanc, ladite texture faisant contraste par rapport au reste du flanc, ladite texture comprenant une pluralité d'éléments en protubérance ou en creux venus de matière avec ledit flanc, la texture étant disposée sur le flanc du pneumatique au-dessus de la zone de largeur maximale du pneumatique, ladite texture couvrant au moins 20% de la surface du flanc située au-dessus de la zone de largeur maximale et la texture formant une surface de texture globalement annulaire, et le pas moyen des éléments de texture étant compris entre 0.05 et 0.35mm.

Grâce à cette architecture, les pneumatiques disposent d'un moyen efficace pour réduire l'adhérence des salissures, en particulier des boues, le long du flanc. Les boues liquides, moins adhérentes, sont plus facilement évacuées, notamment lors de la rotation du pneumatique. Les qualités aérodynamiques du pneumatique sont ainsi conservées. L'agencement de textures réduisant l'adhérence des salissures au niveau de la zone du flanc situé entre la zone de largeur maximale du pneumatique et la bande de roulement diminue la création de perturbations des flux d'air. Ces perturbations augmentent la trainée aérodynamique. En effet, les filets d'air circulant le long du flanc se décollent plus rapidement de la paroi et le passage du régime laminaire vers le régime turbulent se produit à une vitesse moins élevée. Ces perturbations entrainent une dégradation de la consommation du véhicule. Grâce au pneumatique précédemment décrit, ces phénomènes défavorables sont fortement atténués.

De manière avantageuse, le pas moyen des éléments de texture est compris entre 0.15 et 0.3 mm et plus préférentiellement entre 0.18 et 0.25 mm. Un tel agencement permet de réduire encore d'avantage l'adhérence et l'incrustation des particules, salissures, et de la boue.

Selon un mode de réalisation avantageux, la texture comporte une ou plusieurs zones d'interruption, chacune des zones d'interruption présentant un angle **α** inférieur à 20°, et plus préférentiellement inférieur à 5°.

Selon un mode de réalisation avantageux, la texture occupe une surface d'au moins 40%, et préférentiellement entre 40% et 60% de la surface du flanc située radialement extérieurement à la zone de largeur maximale.

Une grande surface doit être couverte par les textures dans cette zone critique afin de permettre une efficacité notable.

Selon encore une mode de réalisation avantageux, des marquages sont intégrés dans la texture. Ces marquages ont de préférence une luminance plus élevée d'au moins 5 points, et préférentiellement d'au moins 12 points.

De manière avantageuse, les éléments de la texture sont en retrait par rapport à la surface du flanc du pneumatique.

Cet agencement est particulièrement favorable à l'optimisation des caractéristiques aérodynamiques du pneumatique.

La hauteur moyenne de la texture est avantageusement comprise entre 0.2 et 1 mm, préférentiellement entre 0.25 et 0.6 mm et plus préférentiellement entre 0.3 et 0.5 mm.

Selon un autre mode de réalisation, les éléments de la texture sont dans un logement en creux par rapport à la surface du flanc, de façon à ce que les extrémités axialement extérieures des éléments de la texture soient en retrait par rapport à la surface du flanc du pneumatique, ou sensiblement affleurant à la surface du pneumatique.

Selon encore un mode de réalisation avantageux, tout ou partie des éléments en protubérance forme des brins, lesdits brins étant répartis dans le motif selon une densité au moins égale à quatre brins par millimètre carré (mm²), chaque brin ayant une section moyenne comprise entre 0,0005 mm² et 1 mm² et plus préférentiellement une section moyenne comprise entre 0,008 et 0,15 mm².

Selon un exemple de réalisation, tout ou partie des éléments en protubérance forme des lames parallèles entre elles, le pas des lames dans le motif étant au plus égal à 0,5 mm, chaque lame ayant une largeur moyenne comprise entre 0,02 mm et 0,35 mm, et plus préférentiellement comprise entre 0,05 mm et 0.1 mm.

Selon un autre exemple de réalisation, tout ou partie des éléments en protubérance forme des parallélépipèdes de côté compris entre 0,05 mm et 0,3 mm, de hauteur comprise entre 0,05 mm et 0,5 mm, la distance entre deux parallélépipèdes adjacents dans la texture étant comprise entre 0,02 mm et 0.35 mm.

Selon encore un autre exemple de réalisation, tout ou partie des éléments en creux forme des stries sensiblement parallèles entre elles, le pas des stries dans le motif étant au plus égal à 0,5 mm, chaque strie ayant une largeur moyenne comprise entre 0,02 mm et 0,35 mm, et plus préférentiellement comprise entre 0,05 mm et 0.1 mm.

Dans un autre exemple de réalisation, tout ou partie des éléments en creux forme des cavités répartis dans la texture selon une densité au moins égale à quatre cavités par millimètre carré (mm²), chaque cavité ayant une section moyenne comprise entre 0,0005 mm² et 1 mm², et plus préférentiellement une section moyenne comprise entre 0,008 et 0,15 mm².

Selon encore un autre exemple de réalisation, tout ou partie des éléments en creux ou en protubérance présentent des formes et des distances variables entre eux.

De manière avantageuse, la texture présente une luminosité dite première luminosité (L*1), le reste du flanc présente une luminosité dite seconde luminosité (L*2), la différence de luminosité entre la luminosité L*1 et la luminosité L*2 étant d'au moins 5 unités (de luminosité sur une échelle variant de 0 à 100).

Selon une telle architecture, les surfaces texturées absorbent la lumière. A l'inverse, les surfaces plus lisses du flanc permettent une meilleure réflexion de la lumière. Cela crée de fait un contraste entre les deux surfaces et rend davantage visible la zone texturée.

Un tel écart entre les niveaux de luminosité permet de garantir une bonne différence du niveau de contraste. Cet effet de contraste peut avantageusement servir pour intégrer des éléments visuels ou graphiques dont la taille est minimisée permettant ainsi de diminuer leur impact sur l'aérodynamisme du pneu.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement du pneumatique et un bourrelet de ce pneumatique, débutant à partir des extrémités des découpures de la bande de roulement et se prolongeant jusqu'au bourrelet.

Par « texture », on entend un agencement organisé d'une pluralité d'éléments, tout ou partie des éléments de l'agencement étant la répétition d'un même élément de base, par exemple, un brin ou une lamelle.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

Par « luminosité », ou « luminance » on entend le paramètre qui caractérise une surface à réfléchir plus ou moins la lumière. La luminosité est exprimée selon une échelle allant de 0 à 100 selon le modèle colorimétrique L*a*b* établit par la CIE (Commission Internationale de l'Eclairage) en 1976. La valeur 100 représente le blanc ou la réflexion totale ; la valeur 0, le noir ou l'absorption totale.

### DESCRIPTION DES FIGURES

Tous les détails de réalisation sont donnés dans la description qui suit, complétée par les figures 1A à 9, présentées uniquement à des fins d'exemples non limitatifs, et dans lesquelles:
- les figures 1A à 1D sont des représentations schématiques partielles de pneumatiques montrant la bande de roulement et divers exemples de réalisation de flancs externes ;
- les figures 2 et 3 sont des représentations schématiques d'une coupe d'éléments de texture de flanc illustrant divers exemples de hauteurs de textures par rapport à la paroi du flanc ;
- la figure 4 représente une partie de la texture du flanc selon un premier exemple de réalisation selon lequel la texture présente des éléments en protubérance en forme de brins ;
- la figure 5 représente une partie de la texture du flanc selon un second exemple de réalisation dans lequel la texture présente des éléments en protubérance en forme de lamelles ;
- la figure 6 représente une partie de la texture du flanc, selon un troisième exemple de réalisation dans lequel la texture présente des éléments en protubérance en forme de parallélépipèdes ;
- la figure 7 représente une partie de la texture du flanc, selon un quatrième exemple de réalisation dans lequel la texture présente des éléments en protubérance dont les formes et les distances entre éléments en protubérance sont variables ;
- la figure 8 représente une partie de la texture du flanc, selon un cinquième exemple de réalisation dans lequel la texture présente des éléments en creux, coniques dans cet exemple ;
- la figure 9 représente une vue agrandie d'une cavité d'un élément en creux de la texture de la figure 8.

### DESCRIPTION DETAILLEE DE L'INVENTION

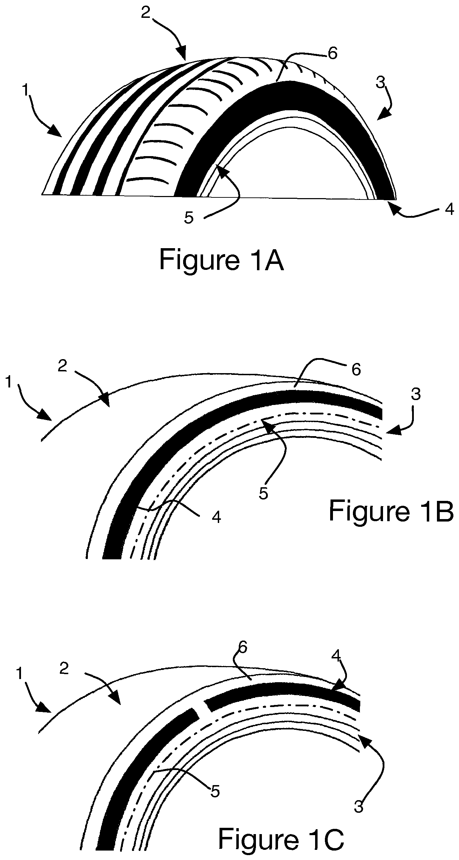

Les figures 1A à 1D illustrent des exemples de réalisation d'un pneumatique selon l'invention. Sur les figures, le pneumatique 1 comprend une bande de roulement 2 entourée de part et d'autre de flancs 3. La bande de roulement 8 prévoit une surface de contact avec le sol. Les flancs ont en général un profil incurvé axialement vers l'extérieur du pneumatique. Ce type de profil permet de définir une zone 5 de largeur maximale, formant une couronne, tel qu'indiqué sur les figures 1A à 1D. La surface entre cette couronne et le début de la bande de roulement 2 comprend une texture 4 spécialement adaptée pour réduire l'adhérence des particules, salissures, boues, et autres corps étrangers au pneumatique.

En effet, les inventeurs ont constaté que les particules adhérant aux flancs des pneumatiques, lorsqu'elles sont situées essentiellement entre l'épaule du pneumatique et l'équateur sur le flanc externe, à partir d'une taille de 0.2 mm en saillie, créent des perturbations locales des flux d'air. Les filets d'air se décollent plus rapidement le long du flanc du pneu et le passage entre le régime laminaire et le régime turbulent se passe à une vitesse plus réduite, d'où la dégradation de la consommation du véhicule par augmentation entre autres du couple de brassage aérodynamique. D'autre part, la vitesse de défilement de l'épaule supérieure du pneu est quasiment le double de la vitesse du véhicule. Pour un véhicule roulant à 100 km/h, la partie du flanc sur laquelle les filets d'air commencent à se décoller défile à environ 180 km/h, d'où la sensibilité du phénomène sur la consommation.

Par ailleurs, les inventeurs ont aussi remarqué que les boues sont plus faciles à évacuer lorsqu'elles sont encore liquides, avant leur séchage. Le pneumatique selon l'invention prend en compte ces différents paramètres et vise notamment à intégrer une texture optimisée de manière à minimiser l'adhérence des boues liquides.

La surface texturée est donc située entre le bas de la sculpture de la bande de roulement 2 au niveau de l'épaule 6 du pneumatique (soit à la fin des dernières entailles) et l'équateur du pneumatique (soit la partie axialement la plus externe des flancs).

Pour optimiser l'efficacité, la surface texturée a une forme sensiblement annulaire et est appliquée sur une surface couvrant au moins 20%, et plus préférentiellement entre 40 et 60%, en encore plus préférentiellement entre 60% et 80% de la surface du flanc située entre la zone 5 de largeur maximale et la bande de roulement 2.

L'agencement de la texture 4 peut aussi être optimisé sur le plan angulaire, avec d'une part une couverture angulaire s'étendant sur au moins 270 degrés, préférentiellement sur au moins 300 degrés, et plus préférentiellement sur au moins 330 degrés.

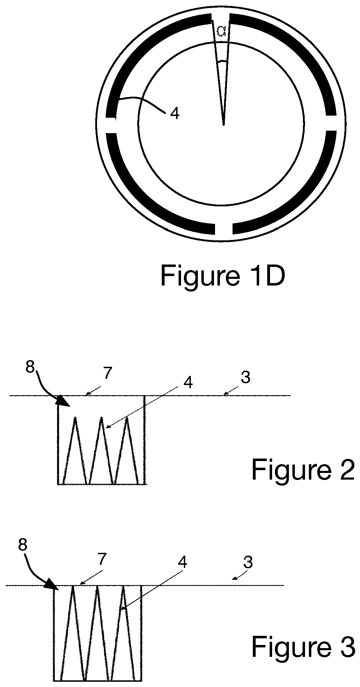

Dans les exemples illustrés, la surface de texture 4 est agencée angulairement soit de façon continue tel que montré aux figures 1A et 1B, ou discontinue, comme le montrent les exemples des figures 1C et 1D.

Dans le cas particulier des flancs avec cordon de protection (flancs court des pneumatiques haute performance), le point bas de la zone à considérer est le point le plus axialement extérieur quand le pneumatique est non monté sur sa jante. Un tel exemple est illustré à la figure 1A.

Compte tenu du fait que la bande de roulement 2 et l'épaule 6 du pneumatique s'auto-nettoient lors du roulage du véhicule par contact répété avec la route, ces zones peuvent se dispenser de texture.

Sous l'équateur 5 (la partie axialement la plus externe), lors de roulages à haute vitesse, les filets d'air sont décollés du flanc. La présence de textures aurait ainsi peu ou pas d'impact sur les caractéristiques aérodynamiques.

Par contre, aux vitesses intermédiaires, les filets d'air peuvent se décoller en-dessous de l'équateur du pneumatique. Il peut donc s'avérer avantageux de prévoir un prolongement de la surface texturée, si le profil du flanc le permet, à 20 mm en dessous de son équateur pour un pneu tourisme, 40 mm pour un pneu camionnette et à 60 mm en dessous de son équateur pour un pneumatique destiné à équiper des véhicules de type poids lourd.

Préférentiellement, au moins le flanc coté extérieur véhicule contient cette texture.

La figure 2 illustre schématiquement une coupe partielle des éléments de la texture 4. Les éléments de texture sont dans une cavité 8. On observe que les sommets des éléments de textures sont en retrait par rapport à la surface 7 du flanc 3 du pneumatique. Par exemple, la profondeur moyenne de la texture est comprise entre 0.2 et 1 mm, préférentiellement entre 0.25 et 0.6 mm et plus préférentiellement entre 0.3 et 0.5 mm.

La figure 3 illustre un autre type d'agencement dans lequel les éléments de la texture affleurent la surface 7 du flanc 3 du pneumatique.

Afin d'optimiser les propriétés de non adhérence des éléments de texture, le pas moyen des éléments de texture est compris entre 0.05 et 0.35 mm, préférentiellement entre 0.15 et 0.3 mm et plus préférentiellement entre 0.18 et 0.25 mm. Selon les modes de réalisation, le pas peut être fixe ou variable.

Selon un agencement préférentiel, la texture 4 présente une luminosité dite première luminosité L*1. Le reste du flanc 3 présente une luminosité dite seconde luminosité L*2. L'écart de luminosité entre la luminosité L*1 et la luminosité L*2 est de préférence d'au moins 5 unités.

Selon diverses variantes de réalisation, des marquages sont intégrés dans la texture. Ces marquages ont une luminance plus élevée d'au moins 5 points, et préférentiellement d'au moins 12 points par rapport au reste de la texture. Cet écart de luminosité permet de rendre les marquages bien visibles. Une telle caractéristique est particulièrement avantageuse lorsque le pneumatique se trouve dans un contexte où la visibilité est restreinte. Les marquages sont préférentiellement encastrés dans la texture, ou affleurant, ils ne sont pas en protubérance par rapport à la texture.

L'appareil de mesure de la luminosité approprié est un spectro-colorimètre CM 700D de la marque KONICA-MINOLTA, (marque déposée). Cet appareil est adapté pour mesurer :
- la luminosité L*1, L*2 des différentes zones ;
- une composante a* qui définit une première nuance de couleur entre le rouge et le vert ;
- une composante b* qui définit une deuxième nuance de couleur entre le jaune et le bleu.

On positionne ledit appareil sur la partie du pneumatique que l'on veut mesurer et ledit appareil donne les valeurs des trois paramètres L*, a*, b* relatifs à la surface mesurée. Ces mesures sont effectuées avec le mode « SCI » (Mode de réflexion spéculaire incluse) paramétré à un angle de 10° et un réglage de la lumière de type D65 (réglage défini selon la Commission Internationale de l'Eclairage, CIE). Grâce à cet appareil, on quantifie la luminosité des textures 4 du flanc qui est ensuite comparée à la luminosité des parties du flanc non texturées.

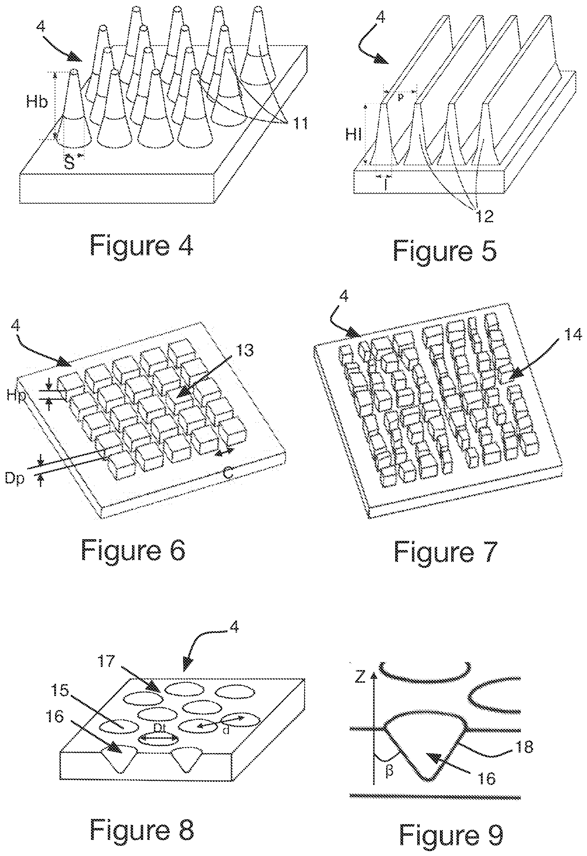

Les figures 4 à 9 illustrent des exemples de textures 4 pouvant être disposées sur la surface de texture globalement annulaire selon l'invention.

La figure 4 illustre un mode de réalisation dans lequel la texture comporte une pluralité de brins 11. Les brins 11 sont répartis dans la texture selon une densité au moins égale à un brin par mm2, chaque brin ayant une section moyenne S comprise entre 0,0005 mm² et 1 mm². On note que la section moyenne de chaque brin correspond à la moyenne des sections S mesurées à intervalles réguliers depuis la base du brin. Les brins ont une forme globalement conique avec une section diminuant dans la hauteur Hb de ces brins.

La figure 5 illustre un mode de réalisation dans lequel la texture 4 comporte une pluralité de lames 12 parallèles entre elles, le pas des lames 12 dans la texture étant au plus égal à 0,5 mm, chaque lame 12 ayant une largeur moyenne comprise entre 0,02 mm et 0,5 mm. On note que la largeur moyenne correspond à la moyenne des largeurs l mesurées à intervalles réguliers dans la hauteur Hl de la lame, la hauteur de chaque lame étant comprise entre 0,05 et 0,5 mm.

Dans une autre variante de réalisation, la texture comporte une combinaison de brins 11 et/ou et de lames 12. L'invention n'est pas limitée aux exemples décrits et représentés et diverses modifications peuvent y être apportées sans sortir de son cadre. Ainsi, selon une autre variante de réalisation non limitative, les lames 12 de la figure 5 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Dans l'exemple de la figure 6, les textures ont une section parallélépipédique 13 de côté C compris entre 0,05 mm et 0,5 mm, de hauteur Hp comprise entre 0,05 mm et 0,5 mm, la distance Dp entre deux cavités adjacentes dans la texture étant comprise entre 0,05 mm et 0.5 mm. En variante la section des textures peut être circulaire, polygonale (par exemple hexagonale). Avec les structures carrées ou polygonales, il est possible d'organiser plus facilement les éléments les uns par rapport aux autres de sorte à limiter la surface des zones intermédiaires entre les éléments. Dans la variante de la figure 7, les éléments 14 présentent des formes et des distances variables entre eux. Cette variante permet de rendre moins visible les détails de la texture 4.

La figure 8 illustre une texture 4 selon une autre variante de réalisation non limitative. Dans cette variante, la texture est formée par une pluralité de cavités 16. Les cavités 16 sont ici en forme de cônes qui s'étendent dans la profondeur de la surface et débouchent sur cette surface en formant des ouvertures 15 circulaires. Les cavités 16 ont ainsi une section qui diminue dans la profondeur. On note que dans cette variante, les ouvertures 15 des cavités 16 ne se touchent pas. Les ouvertures 15 sont séparées par des zones intermédiaires 17. En outre, les ouvertures 15 sont régulièrement réparties de sorte que la distance d entre chaque ouverture 15 est globalement similaire. La figure 9 est une vue agrandie de la texture de la figure 8. Tout ou partie des cavités a ici au moins une paroi 18 qui, selon une vue en coupe, forme un angle β compris entre 10° et 60° par rapport à une direction Z perpendiculaire à la texture 4.

Pour les éléments de texture formant des brins ou des parallélépipèdes ou des cavités, chacun des éléments de texture peut être logé dans un cercle virtuel de diamètre inférieur ou égal à 1mm. Ces dimensions permettent d'optimiser les propriétés anti-salissures des textures, et donc les performances aérodynamiques des pneumatiques.

Pour les éléments de texture formant des lames ou des stries, chacun des éléments de texture est avantageusement orienté selon un angle compris entre 20 et 90° par rapport à la direction circonférentielle. Cette géométrie permet d'optimiser d'une part les caractéristiques de moulage des pneumatiques en facilitant l'évacuation de l'air dans le moule, et d'autre part les propriétés anti-salissures des textures, et donc les performances aérodynamiques des pneumatiques.

### Numéros de référence employés sur les figures

- 1: Pneumatique
- 2: Bande de roulement
- 3: Flanc
- 4: Texture
- 5: Zone de plus grande largeur du flanc
- 6: Epaule
- 7: Surface externe du flanc
- 8: Logement

- 11: Brins
- 12: Lames
- 13: Section parallélépipédique
- 14: Eléments en protubérance
- 15: Ouvertures
- 16: Cavités
- 17: Zones intermédiaires
- 18: Paroi de cavité

## Revendications

1. Pneumatique (1) en matériau caoutchoutique comprenant une bande de roulement (2) et deux flancs (3) délimitant ladite bande de roulement (2), chaque flanc comprenant une zone (5) de largeur maximale, le pneumatique comprenant au moins une texture (4) sur au moins un flanc, ladite texture faisant contraste par rapport au reste du flanc, ladite texture (4) comprenant une pluralité d'éléments en protubérance ou en creux venus de matière avec ledit flanc, **caractérisé en ce que** la texture (4) est disposée sur le flanc du pneumatique au-dessus de la zone (5) de largeur maximale du pneumatique, ladite texture (4) couvrant au moins 20% de la surface du flanc située au-dessus de la zone de largeur maximale et **en ce que** la texture (4) forme une surface de texture globalement annulaire, et **en ce que** le pas moyen des éléments de texture est compris entre 0.05 et 0.35mm.

2. Pneumatique (1) selon la revendication 1, **caractérisé en ce que** le pas moyen des éléments de texture est compris entre 0.15 et 0.3 mm et plus préférentiellement entre 0.18 et 0.25 mm.

3. Pneumatique (1) selon l'une quelconque des revendications précédentes, dans lequel la texture (4) présente une luminosité dite première luminosité (L*1), le reste du flanc présente une luminosité dite seconde luminosité (L*2), **caractérisé en ce que** la différence de luminosité entre la luminosité L*1 et la luminosité L*2 est d'au moins 5 unités.

4. Pneumatique selon l'une quelconque des revendications 1 à 3, **caractérisé en ce que** la texture (4) comporte une ou plusieurs zones d'interruption, chacune des zones d'interruption présentant un angle **α** inférieur à 20°, et plus préférentiellement inférieur à 5°.

5. Pneumatique selon l'une quelconque des revendications 1 à 4, **caractérisé en ce que** la texture (4) occupe une surface d'au moins 40%, et préférentiellement entre 40% et 60% de la surface du flanc située radialement extérieurement à la zone (5) de largeur maximale.

6. Pneumatique selon l'une quelconque des revendications 1 à 5, **caractérisé en ce que** la hauteur moyenne de la texture est comprise entre 0.2 et 1 mm, préférentiellement entre 0.25 et 0.6 mm et plus préférentiellement entre 0.3 et 0.5 mm.

7. Pneumatique selon l'une quelconque des revendications 1 à 6, **caractérisé en ce que** les éléments de la texture (4) sont dans un logement (8) en creux par rapport à la surface du flanc, de façon à ce que les extrémités de la texture soit en retrait par rapport à la surface (7) du flanc (3) du pneumatique, ou sensiblement affleurant à la surface du pneumatique.

8. Pneumatique (1) selon l'une quelconque des revendication 1 à 7, **caractérisé en ce que** tout ou partie des éléments en protubérance forme des brins, lesdits brins (11) étant répartis dans le motif selon une densité au moins égale à quatre brins par millimètre carré (mm²), chaque brin ayant une section moyenne comprise entre 0,0005 mm² et 1 mm².

9. Pneumatique (1) selon l'une quelconque des revendication 1 à 7, **caractérisé en ce que** tout ou partie des éléments en protubérance forme des lames (12) parallèles entre elles, chaque lame ayant une largeur moyenne comprise entre 0,02 mm et 0,35 mm.

10. Pneumatique (1) selon l'une quelconque des revendications 1 à 7, **caractérisé en ce que** tout ou partie des éléments en protubérance forme des parallélépipèdes (13) de côté compris entre 0,05 mm et 0,3 mm, de hauteur comprise entre 0,05 mm et 0,5 mm, la distance entre deux parallélépipèdes adjacents dans la texture étant comprise entre 0,02 mm et 0.35 mm.

11. Pneumatique (1) selon l'une quelconque des revendication 1 à 7, **caractérisé en ce que** tout ou partie des éléments en creux forme des stries sensiblement parallèles entre elles, chaque strie ayant une largeur moyenne comprise entre 0,02 mm et 0,35 mm.

12. Pneumatique (1) selon l'une quelconque des revendication 1 à 7, **caractérisé en ce que** tout ou partie des éléments en creux forme des cavités (16) répartis dans la texture selon une densité au moins égale à quatre cavités par millimètre carré (mm²), chaque cavité ayant une section moyenne comprise entre 0,0005 mm² et 1 mm².

13. Pneumatique (1) selon l'une quelconque des revendication 1 à 7, **caractérisé en ce que** tout ou partie des éléments en creux ou en protubérance présentent des formes et des distances variables entre eux.

## Patentansprüche

1. Reifen (1) aus Kautschukmaterial, welcher einen Laufstreifen (2) und zwei Seitenwände (3), die den Laufstreifen (2) begrenzen, umfasst, wobei jede Seitenwand einen Bereich (5) maximaler Breite umfasst, wobei der Reifen wenigstens eine Textur (4) auf wenigstens einer Seitenwand umfasst, wobei die Textur einen Kontrast in Bezug auf den Rest der Seitenwand bildet, wobei die Textur (4) eine Vielzahl vorspringender oder vertiefter Elemente umfasst, die materialeinheitlich mit der Seitenwand ausgebildet sind, **dadurch gekennzeichnet, dass** die Textur (4) auf der Seitenwand des Reifens oberhalb des Bereichs (5) maximaler Breite des Reifens angeordnet ist, wobei die Textur (4) mindestens 20 % der Fläche der Seitenwand bedeckt, die sich oberhalb des Bereichs maximaler Breite befindet, und dadurch, dass die Textur (4) eine im Wesentlichen ringförmige Texturfläche bildet, und dadurch, dass der durchschnittliche Mittenabstand der Texturelemente zwischen 0,05 und 0,35 mm liegt.

2. Reifen (1) nach Anspruch 1, **dadurch gekennzeichnet, dass** der durchschnittliche Mittenabstand der Texturelemente zwischen 0,15 und 0,3 mm und, stärker bevorzugt, zwischen 0,18 und 0,25 mm liegt.

3. Reifen (1) nach einem der vorhergehenden Ansprüche, wobei die Textur (4) eine Helligkeit (L*1), erste Helligkeit genannt, aufweist und der Rest der Seitenwand eine Helligkeit (L*2), zweite Helligkeit genannt, aufweist, **dadurch gekennzeichnet, dass** der Helligkeitsunterschied zwischen der Helligkeit L*1 und der Helligkeit L*2 mindestens 5 Einheiten beträgt.

4. Reifen nach einem der Ansprüche 1 bis 3, **dadurch gekennzeichnet, dass** die Textur (4) mehrere Unterbrechungsbereiche umfasst, wobei jeder der Unterbrechungsbereiche einen Winkel **α** aufweist, der kleiner als 20° und, stärker bevorzugt, kleiner als 5° ist.

5. Reifen nach einem der Ansprüche 1 bis 4, **dadurch gekennzeichnet, dass** die Textur (4) eine Fläche von mindestens 40 % und vorzugsweise zwischen 40 % und 60 % der Fläche der Seitenwand einnimmt, die sich radial außerhalb des Bereichs (5) maximaler Breite befindet.

6. Reifen nach einem der Ansprüche 1 bis 5, **dadurch gekennzeichnet, dass** die mittlere Höhe der Textur zwischen 0,2 und 1 mm, vorzugsweise zwischen 0,25 und 0,6 mm und stärker bevorzugt zwischen 0,3 und 0,5 mm liegt.

7. Reifen nach einem der Ansprüche 1 bis 6, **dadurch gekennzeichnet, dass** sich die Elemente der Textur (4) in einer als Vertiefung in Bezug auf die Oberfläche der Seitenwand ausgebildeten Aufnahme (8) befinden, derart, dass die Enden der Textur in Bezug auf die Oberfläche (7) der Seitenwand (3) des Reifens zurückgesetzt sind oder im Wesentlichen mit der Oberfläche des Reifens bündig sind.

8. Reifen (1) nach einem der Ansprüche 1 bis 7, **dadurch gekennzeichnet, dass** alle oder ein Teil der vorspringenden Elemente Spitzen bilden, wobei die Spitzen (11) in dem Muster mit einer Dichte verteilt sind, die mindestens vier Spitzen pro Quadratmillimeter (mm²) beträgt, wobei jede Spitze einen mittleren Querschnitt zwischen 0,0005 mm² und 1 mm² aufweist.

9. Reifen (1) nach einem der Ansprüche 1 bis 7, **dadurch gekennzeichnet, dass** alle oder ein Teil der vorspringenden Elemente zueinander parallele Lamellen (12) bilden, wobei jede Lamelle eine mittlere Breite zwischen 0,02 mm und 0,35 mm aufweist.

10. Reifen (1) nach einem der Ansprüche 1 bis 7, **dadurch gekennzeichnet, dass** alle oder ein Teil der vorspringenden Elemente Quader (13) mit einer Seitenlänge zwischen 0,05 mm und 0,3 mm und einer Höhe zwischen 0,05 mm und 0,5 mm bilden, wobei der Abstand zwischen zwei benachbarten Quadern in der Textur zwischen 0,02 mm und 0,35 mm beträgt.

11. Reifen (1) nach einem der Ansprüche 1 bis 7, **dadurch gekennzeichnet, dass** alle oder ein Teil der vertieften Elemente Riefen bilden, die im Wesentlichen zueinander parallel sind, wobei jede Riefe eine mittlere Breite zwischen 0,02 mm und 0,35 mm aufweist.

12. Reifen (1) nach einem der Ansprüche 1 bis 7, **dadurch gekennzeichnet, dass** alle oder ein Teil der vertieften Elemente Vertiefungen (16) bilden, die in der Textur mit einer Dichte verteilt sind, die mindestens vier Vertiefungen pro Quadratmillimeter (mm²) beträgt, wobei jede Vertiefung einen mittleren Querschnitt zwischen 0,0005 mm² und 1 mm² aufweist.

13. Reifen (1) nach einem der Ansprüche 1 bis 7, **dadurch gekennzeichnet, dass** alle oder ein Teil der vertieften oder vorspringenden Elemente Formen und Abstände aufweisen, die untereinander variieren.

## Claims

1. Tyre (1) made of rubbery material, comprising a tread (2) and two sidewalls (3) delimiting said tread (2), each sidewall comprising a zone (5) of maximum width, the tyre comprising at least one texture (4) on at least one sidewall, said texture contrasting with the rest of the sidewall, said texture (4) comprising a plurality of protruding or recessed elements formed integrally with said sidewall, **characterized in that** the texture (4) is disposed on the sidewall of the tyre above the zone (5) of maximum width of the tyre, said texture (4) covering at least 20% of the surface of the sidewall above the zone of maximum width, and **in that** the texture (4) forms a generally annular texture surface, and **in that** the mean spacing of the texture elements is between 0.05 and 0.35 mm.

2. Tyre (1) according to Claim 1, **characterized in that** the mean spacing of the texture elements is between 0.15 and 0.3 mm and more preferably between 0.18 and 0.25 mm.

3. Tyre (1) according to either one of the preceding claims, wherein the texture (4) has a lightness referred to as first lightness (L*1) and the rest of the sidewall has a lightness referred to as second lightness (L*2), **characterized in that** the difference in lightness between the lightness L*1 and the lightness L*2 is at least 5 units.

4. Tyre according to any one of Claims 1 to 3, **characterized in that** the texture (4) has one or more interruption zones, each of the interruption zones exhibiting an angle **α** of less than 20°, and more preferably less than 5°.

5. Tyre according to any one of Claims 1 to 4, **characterized in that** the texture (4) takes up an area of at least 40%, and preferably between 40% and 60% of the surface of the sidewall radially on the outside of the zone (5) of maximum width.

6. Tyre according to any one of Claims 1 to 5, **characterized in that** the mean height of the texture is between 0.2 and 1 mm, preferably between 0.25 and 0.6 mm and more preferably between 0.3 and 0.5 mm.

7. Tyre according to any one of Claims 1 to 6, **characterized in that** the elements of the texture (4) are in a housing (8) recessed into the surface of the sidewall, such that the ends of the texture are set back from the surface (7) of the sidewall (3) of the tyre, or substantially flush with the surface of the tyre.

8. Tyre (1) according to any one of Claims 1 to 7, **characterized in that** all or some of the protruding elements form strands, said strands (11) being distributed in the pattern at a density at least equal to four strands per square millimetre (mm²), each strand having a mean cross section of between 0.0005 mm² and 1 mm².

9. Tyre (1) according to any one of Claims 1 to 7, **characterized in that** all or some of the protruding elements form mutually parallel blades (12), each blade having a mean width of between 0.02 mm and 0.35 mm.

10. Tyre (1) according to any one of Claims 1 to 7, **characterized in that** all or some of the protruding elements form parallelepipeds (13) having a side length of between 0.05 mm and 0.3 mm and a height of between 0.05 mm and 0.5 mm, the distance between two adjacent parallelepipeds in the texture being between 0.02 mm and 0.35 mm.

11. Tyre (1) according to any one of Claims 1 to 7, **characterized in that** all or some of the recessed elements form mutually parallel striations, each striation having a mean width of between 0.02 mm and 0.35 mm.

12. Tyre (1) according to any one of Claims 1 to 7, **characterized in that** all or some of the recessed elements form cavities (16) distributed through the texture at a density at least equal to four cavities per square millimetre (mm²), each cavity having a mean cross section of between 0.0005 mm² and 1 mm².

13. Tyre (1) according to any one of Claims 1 to 7, **characterized in that** all or some of the recessed or protruding elements exhibit mutually variable shapes and distances.
